# EUROPÄISCHE PATENTSCHRIFT

(11) **EP 2 522 917 B1**
(45) Veröffentlichungstag und Bekanntmachung des Hinweises auf die Patenterteilung: **18.09.2013**
(21) Anmeldenummer: 12167083.0
(22) Anmeldetag: 08.05.2012
(51) Int. Cl.: F24D 11/00, F24D 19/10

(54) **Verfahren zum Betrieb einer Heizungsanlage**
Method for operating a heating assembly
Procédé de fonctionnement d'une installation de chauffage

(30) Priorität: 13.05.2011 DE 102011105823
(43) Veröffentlichungstag der Anmeldung: 14.11.2012
(73) Patentinhaber: Viessmann Werke GmbH & Co. KG, 35108 Allendorf (DE)
(72) Erfinder: Berkenkopf, Jürgen, 59969 Hesborn (DE); Osterloh, Reinhard, 59955 Winterberg (DE); Handt, Michael, 35066 Frankenberg (DE)
(74) Vertreter: Wolf, Michael

(56) Entgegenhaltungen:
- DE-A1-102006 034 214
- GB-A- 2 474 421
- US-A1- 2010 195 991

## Beschreibung

Die Erfindung betrifft ein Verfahren zum Betrieb einer Heizungsanlage gemäß dem Oberbegriff der Patentanspruchs 1.

Ein Verfahren der eingangs genannten Art ist nach der DE 10 2006 034 214 A1 bekannt. Bei diesem Verfahren wird in einem Wärmespeicher (in diesem Fall ein Solarspeicher) gespeicherte Wärme zur Unterstützung eines Wärmeerzeugers (in diesem Fall ein Heizkessel) dann einem Heizkreis des Wärmeerzeugers zugeführt, wenn im Wärmespeicher, der mit Heizkreismedium befüllt ist, abzüglich eines vorgegebenen Hysteresewertes eine höhere Temperatur als am Rücklauf des Heizkreises festgestellt wird. Der Sinn dieses Verfahrens besteht dabei darin, im Wärmespeicher gespeicherte Wärme nicht nur zur Brauchwassererwärmung, sondern auch zur Raumheizung zu nutzen.

Der Erfindung liegt die Aufgabe zugrunde, ein Verfahren der eingangs genannten Art zu verbessern.

Diese Aufgabe ist mit einem Verfahren der eingangs genannten Art durch die im Kennzeichen des Patentanspruchs 1 aufgeführten Merkmale gelöst.

Nach der Erfindung ist also vorgesehen, dass die im Wärmespeicher gespeicherte Wärme zusätzlich zum oben genannten Kriterium nur dann dem Heizkreis zugeführt wird, wenn gleichzeitig eine Wärmeanforderung an den Wärmeerzeuger gestellt bzw. eine Wärmeerzeugung gefordert wird, wobei einem Umschaltventil einer Wärmeverteileinrichtung, mit dem Heizkreismedium wahlweise direkt zurück zum Wärmeerzeuger oder in den Wärmespeicher geleitet wird, nur dann elektrische Leistung zugeführt wird, solange der Wärmespeicher in den Heizkreis eingekoppelt ist bzw. solange die Wärmeanforderung bestehen bleibt.

Mit anderen Worten besteht die erfindungsgemäße Verfahrensmaßgabe darin, die Einkoppelung des Wärmespeichers in den Heizkreis des Wärmeerzeugers nur dann vorzunehmen, wenn gleichzeitig eine Aufforderung an den Wärmeerzeuger vorliegt, Wärme zu erzeugen. Liegt eine solche Forderung zumindest seit einem bestimmten Zeitraum nicht mehr vor, wird der Wärmespeicher aus dem Heizkreis ausgekoppelt.

Diese Lösung hat dabei folgenden Vorteil: Der Wärmespeicher ist regelmäßig über eine Wärmeverteileinrichtung (und entsprechende Verbindungsleitungen zur Zu- und Abführung des Heizkreismediums) mit dem Heizkreis verbunden. Diese Wärmeverteileinrichtung wird über die Regelung der Heizungsanlage elektrisch betätigt, wobei sie dann keine elektrische Leistung aufnimmt, wenn der Wärmespeicher aus dem Heizkreis ausgekoppelt ist. Umgekehrt ist der Wärmeverteileinrichtung bzw. einem entsprechenden (Dreiwege-) Schaltventil elektrische Leistung zuzuführen, solange der Wärmespeicher in den Heizkreis eingekoppelt ist. Dank der erfindungsgemäßen Verfahrensmaßgabe kann dabei die elektrische Leistungsabgabe auf den Zeitraum beschränkt werden, in dem tatsächlich die Heizungsunterstützung aus dem Wärmespeicher sinnvoll ist bzw. erfolgt. Dies führt zu einer nicht unbeträchtlichen Einsparung an elektrischer Energie.

Der Vollständigkeit halber wird noch auf die DE 200 01 539 U1 hingewiesen: Dieses Dokument offenbart auch den Oberbegriff des Anspruchs 1. Diese Lösung unterscheidet sich von der erfindungsgemäßen Lösung insbesondere dadurch, dass diese Heizung mit einem vergleichsweise kostenintensiven Mehrwegemischer (Bezugszeichen 74) ausgerüstet ist, dem nur dann elektrische Leistung zuzuführen ist, wenn seine Stellposition verändert werden soll. Erfindungsgemäß ist stattdessen ein wesentlich kostengünstigeres Schaltventil mit Federrückzug vorgesehen, dass darüber hinaus nur zwischen zwei Stellungen schalten, aber nicht mischen kann.

Das erfindungsgemäße Verfahren wird nachfolgend exemplarisch anhand der zeichnerischen Darstellung eines bevorzugten Ausführungsbeispiels näher erläutert.

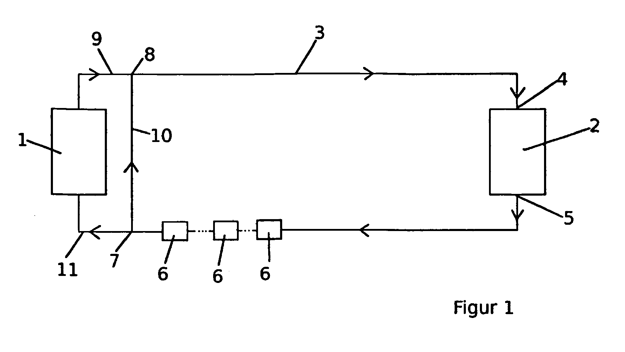

Es zeigt
- Figur 1: einen Schaltplan der erfindungsgemäßen Heizungsanlage.

Die in Figur 1 dargestellte Heizungsanlage besteht, wie bereits erwähnt, insbesondere aus einem Heizkreis 3. Dieser weist einen so genannten Rücklauf bzw. Rücklaufanschluss 4 auf, über den er hydraulisch mit dem Wärmeerzeuger 2 (bevorzugt ein Heizkessel, insbesondere Öl-, Gas- oder Festbrennstoffheizkessel) verbunden ist. Vom Wärmeerzeuger 2 erwärmtes Heizkreismedium wird über den so genannten Vorlauf bzw. Vorlaufanschluss 5 in den Heizkreis zurückgeführt. Auf den Vorlauf folgen dann typischer Weise eine Reihe von in Räumen eines Gebäudes angeordneten Heizkörpern 6, die vom erhitzen Heizkreismedium durchströmt werden, das dabei seine Wärme (an die Räume) abgibt. Nach dem letzten Heizkörper 6 folgt dann ein Ventil (Wärmeverteileinrichtung 7), insbesondere Umschaltventil, besonders bevorzugt ein Dreiwege-Schaltventil, mit dem das Heizkreismedium wahlweise direkt (über einen entsprechenden Bypass) zurück zum Rücklaufanschluss 4 des Wärmeerzeugers 2 oder in den Wärmespeicher 1 geleitet wird. Der bevorzugt als Solarspeicher ausgebildete Wärmespeicher 1 ist dabei, was nicht extra dargestellt ist, thermisch mit einem oder mehreren Sonnenkollektoren verbunden und dient zur Speicherung der aufgenommenen Solarenergie. Der Wärmespeicher 1 ist hierzu mit dem auch durch den Heizkreis 3 strömenden Heizkreismedium befüllt.

Wie ebenfalls bereits erwähnt, wird der Wärmespeicher 1 über das Ventil (die Wärmeverteileinrichtung 7) dann in den Heizkreis 3 eingekoppelt, wenn im Wärmespeicher 1 abzüglich eines vorgegebenen (vom Benutzer einstellbaren) Hysteresewertes eine höhere Temperatur als am Rücklauf des Heizkreises 3 festgestellt wird. Die Maßgabe bezüglich des "vorgegebenen Hysteresewertes" bringt dabei zum Ausdruck, dass die Einkoppelung zum Beispiel erst dann erfolgen soll bzw. erfolgt, wenn die Temperatur im Wärmespeicher 5°C größer/höher als die Temperatur am Rücklauf ist. Auf diese Weise soll vermieden werden, dass die Einkoppelung bereits dann erfolgt, wenn zum Beispiel nur 1°C Temperaturdifferenz zwischen dem Wärmespeicher 1 und dem Rücklauf feststellbar ist bzw. besteht. Theoretisch, wenn auch technisch nicht sinnvoll, könnte der genannte Hysteresewert (über eine entsprechende Einstellung an der Regelung der Heizungsanlage) aber auch auf 0°C festgelegt werden, d. h. die Einkoppelung würde erfolgen, sobald die Temperatur im Wärmespeicher 1 minimal größer als die Temperatur am Rücklauf ist.

Wie weiterhin aus Figur 1 ersichtlich, weist der Heizkreis 3 neben dem Ventil (der Wärmeverteileinrichtung 7) bzw. der entsprechenden Verzweigung am anderen Ende des so gebildeten Bypasses eine Strömungsführung 8 auf, an der eine vom Wärmespeicher 1 kommende Rohrleitung 9 mit einer vom Bypass bzw. vom Ventil kommenden Rohrleitung 10 zusammengeführt ist, wobei diese Zusammenführung dann direkt in den Rücklaufanschluss 4 mündet. An dieser Strömungsführung 8 sind dabei entsprechende, an sich bekannte Elemente vorgesehen, die insbesondere dafür sorgen, dass aus dem Bypass kommendes Heizkreismedium nicht in den Wärmespeicher 1 zurückfließen kann.

Für den Betrieb der erfindungsgemäßen Heizungsanlage, bei dem ein Wärmespeicher 1 zur Unterstützung eines Wärmeerzeugers 2, wie erwähnt, dann in einen Heizkreis 3 des Wärmeerzeugers 2 eingekoppelt wird, wenn im Wärmespeicher 1 bezüglich eines vorgegebenen Hysteresewertes eine höhere Temperatur als am Rücklauf des Heizkreises 3 festgestellt wird, ist nun wesentlich, dass der Wärmespeicher 1 außerdem nur dann in den Heizkreis 3 eingekoppelt wird, wenn gleichzeitig eine Wärmeanforderung an den Wärmeerzeuger 2 gestellt wird, wobei einem Umschaltventil einer Wärmeverteileinrichtung 7, mit dem Heizkreismedium wahlweise direkt zurück zum Wärmeerzeuger 2 oder in den Wärmespeicher 1 geleitet wird, nur dann elektrische Leistung zugeführt wird, solange der Wärmespeicher 1 in den Heizkreis 3 eingekoppelt ist.

Da das mit einem Federrückzug versehene Ventil bzw. das Dreiwege-Schaltventil bei der erfindungsgemäßen Heizungsanlage bestromt bzw. unter Spannung gesetzt werden muss, um den Strömungsweg vom Vorlauf zur Rohrleitung 11 bzw. zum Wärmespeicher 1 für das Heizkreismedium freizugeben, ist erfindungsgemäß neben der bereits bekannten Bedingung (nämlich Temperaturvergleich zwischen Wärmespeicher 1 und Rücklauf des Wärmeerzeugers 2) eine weitere Bedingung zu erfüllen, nämlich die, dass dieser, die Aufwendung von elektrischer Energie erfordernde Strömungsweg nur dann freigeschaltet wird, wenn der Wärmeerzeuger 2 tatsächlich Wärme erzeugen soll. Ist dies nicht der Fall, bleibt das Ventil unbetätigt und verbraucht auf diese Weise keine Energie.

### Bezugszeichenliste

- 1: Wärmespeicher
- 2: Wärmeerzeuger
- 3: Heizkreis
- 4: Rücklaufanschluss
- 5: Vorlaufanschluss
- 6: Heizkörper
- 7: Wärmeverteileinrichtung
- 8: Strömungsführung
- 9: Rohrleitung
- 10: Rohrleitung
- 11: Rohrleitung

## Patentansprüche

1. Verfahren zum Betrieb einer Heizungsanlage, bei dem in einem Wärmespeicher (1) gespeicherte Wärme zur Unterstützung eines Wärmeerzeugers (2) dann einem Heizkreis (3) des Wärmeerzeugers (2) zugeführt wird, wenn im Wärmespeicher (1) abzüglich eines vorgegebenen Hysteresewertes eine höhere Temperatur als am Rücklauf des Heizkreises (3) festgestellt wird,
**dadurch gekennzeichnet,**
**dass** die im Wärmespeicher (1) gespeicherte Wärme außerdem nur dann dem Heizkreis (3) zugeführt wird, wenn gleichzeitig eine Wärmeanforderung an den Wärmeerzeuger (2) gestellt wird, wobei einem Umschaltventil einer Wärmeverteileinrichtung (7), mit dem Heizkreismedium wahlweise direkt zurück zum Wärmeerzeuger (2) oder in den Wärmespeicher (1) geleitet wird, nur dann elektrische Leistung zugeführt wird, solange der Wärmespeicher (1) in den Heizkreis (3) eingekoppelt ist.

2. Verfahren nach Anspruch 1,
**dadurch gekennzeichnet,**
**dass** der Hysteresewert einstellbar ist.

3. Verfahren nach Anspruch 1 oder 2,
**dadurch gekennzeichnet,**
**dass** als Wärmespeicher (1) ein Solarspeicher verwendet wird.

## Claims

1. A method for operating a heating system in which heat stored in a heat accumulator (1) is fed for supporting a heat generator (2) to a heat circuit (3) of said heat generator (2) if in the heat accumulator (1) a temperature is detected which, after deduction of a predetermined hysteresis value, is higher than in the return of the heating circuit (3),
**characterized in**
**that**, in addition, the heat stored in the heat accumulator (1) is fed to the heating circuit (3) only if, at the same time, heat is required from the heat generator (2), wherein electrical power is fed to a switching valve of a heat distribution device (7), by means of which switching valve heating circuit medium is selectively guided directly back to the heat generator (2) or in the heat accumulator (1), only as long as the heat accumulator (1) is coupled to the heating circuit (3).

2. The method according to claim 1,
**characterized in**
the hysteresis value is adjustable.

3. The method according to claim 1 or claim 2,
**characterized in**
**that** a solar storage unit is used as a heat accumulator (1).

## Revendications

1. Procédé d'exploitation d'une installation de chauffage, dans lequel la chaleur accumulée dans un accumulateur de chaleur (1) est alimentée afin d'assister un générateur de chaleur (2) dans un circuit de chauffage (3) du générateur de chaleur (2), quand dans l'accumulateur de chaleur (1) une température plus haute moins une valeur d'hystérésis prescrite que dans le retour du circuit de chauffage (3) est constatée,
**caractérisé en ce que**
la chaleur accumulée dans l'accumulateur de chaleur (1) est en outre alimentée dans le circuit de chauffage (3), seulement quand simultanément une exigence de chaleur est formulée par le générateur de chaleur (2), dans lequel une puissance électrique est alimentée dans une soupape d'inversion d'un dispositif de distribution de chaleur (7), avec lequel un milieu chauffant est réintroduit directement au choix dans le générateur de chaleur (2) ou dans l'accumulateur de chaleur (1), seulement dès que l'accumulateur de chaleur (1) est couplé au circuit de chauffage (3).

2. Procédé selon la revendication 1,
**caractérisé en ce que**
la valeur d'hystérésis peut être ajustée.

3. Procédé selon les revendications 1 ou 2,
**caractérisé en ce que**
un accumulateur solaire est employé comme accumulateur de chaleur (1).
